# EUROPEAN PATENT APPLICATION

(11) **EP 2 390 864 A1**
(43) Date of publication of application: **30.11.2011**
(21) Application number: 10382151.8
(22) Date of filing: 31.05.2010
(51) Int. Cl.: G09B 19/06, G09B 5/04

(54) **Method for learning a language by means of quai simultaneous playback**

(71) Applicant: Lopez Navaza, Carlos Ramon, 15009 A Coruña (ES)
(72) Inventor: Lopez Navaza, Carlos Ramon, 15009 A Coruña (ES)
(74) Representative: Temino Ceniceros, Ignacio

(57) **Abstract**

Acoustic method for learning languages using quasi simultaneous playback that combines different acoustic principles and techniques and is based on applying specific metrics in the contents of the texts (in number of words) over blocks of read texts and recorded in two different languages and in the duration of the recordings (in tenths of seconds) predefined for four different levels of language proficiency; these levels are categorized as low, medium, high and expert.

## Description

A purpose of this invention is an acoustic method for learning languages using quasi simultaneous playback that combines different acoustic principles and techniques and is based on applying specific metrics in the contents of the texts (in number of words) over blocks of read texts and recorded in two different languages and in the duration of the recordings (in tenths of seconds) predefined for four different levels of language proficiency; these levels are categorized as low, medium, high and expert.

### PRIOR STATE OF THE ART

The inventors, who are experts in the matter, are not aware of any other learning method like the one described below.

### EXPLANATION OF THE INVENTION

In a first aspect of this invention, the method for learning a language using quasi simultaneous playback essentially includes the following stages: (i) coding of translation blocks listed as groups of words, which represent metrics of a specific duration in seconds and a number of predefined words; (ii) definition of the metrics, which are of two types: (a) temporary, measured in tenths of seconds and (b) quantitative, measured in number of words; and where both metrics establish maximums and minimums by proficiency levels of the language to be translated; (iii) establishing of a processes matrix configured for the parameterisation of the aforementioned metric, applying maximum and minimum given times and a determined number of words for each of the levels; and (iv) application of specific acoustic techniques taking into account the way that the sound is perceived, in such a way that it must be heard in both ears, the masking phenomenon between sounds must be neutralized, the delay to apply between emissions with the listed metrics must be precisely determined and finally, the sound emission by languages must be mastered and must be selectable through the left and right ears.

In a second aspect of this invention, the device for learning a language using quasi simultaneous playback includes means for implementing the method described above.

The indicated method or device is mainly used for learning languages.

Throughout the description and claims, the word "encompasses" and its synonyms do not intend to exclude other technical characteristics, additions, components or steps. For experts in the field, other objectives, advantages and characteristics of this invention will in part be derived from the description and in part from placing the invention into practice. The following examples and drawings provide an illustration and are not intended to limit this invention. Additionally, this invention covers all the possible combinations of particular and preferred performances indicated herein.

### DETAILED DESCRIPTION OF THE APPLICATION METHODS AND EXAMPLES

In the practical embodiment of this invention, a method based on applying specific metrics in the contents of the texts (in number of words) over blocks of read texts and recorded in two different languages (the origin and target languages) and in the duration of the recordings (in tenths of seconds) predefined for four different levels of proficiency of the language to be learned is being developed; these levels are categorized as low, medium, high and expert.

Playback of the text can be carried out using any stereo capable device. Using this system enables you to listen to the message in the language that wants to be learned followed by a translation of that same message in the user's origin or native language with a predefined delay and in a quasi simultaneous way.

### Example of a practical embodiment of the invention.

The following table contains a typical example in English and its corresponding Spanish translation.

| TEXT OF THE LANGUAGE TO BE LEARNED (EN) | TEXT OF THE PROFICIENT LANGUAGE (SP) |
|---|---|
| One day, a dog stole a bone from a butcher's shop and ran away with it. | Un día, un perro robó un hueso de una carnicercía y salió corriendo con él. |

### (Step 1) Coding of translation blocks

The translation blocks are groups of words, which represent metrics of a specific duration in seconds and a number of predefined words. Therefore, translation blocks are defined as A, those drafted in the language to be learned (for example English) and B, those of the proficient language (Spanish in the example) and where each translation block in the language to be learned has its corresponding translation block in the proficient language.

The blocks are coded sequentially and numerically as blocks *1*, *2*... *n*; all in such a way that each group of translation block A has its corresponding translated group B sequentially coded in the same manner.

Thus, for example, code 1.A.1 means translation unit number 1, translation block in the language to be learned no.1; code 1.B.4 would mean translation unit 1, translation block in the proficient language no.4. The following table codifies the prior example in a more detailed fashion:

| TRANSLATION UNIT 1. TRANSLATION BLOCK GROUP IN THE LANGUAGE TO BE LEARNED (EN) | TRANSLATION UNIT 1. TRANSLATION BLOCK GROUP IN THE PROFICIENT LANGUAGE (SP) |
|---|---|
| 1.A.1: One day, | 1.B.1: Un día, |
| 1.A.2: a dog stole | 1.B.2: un perro robó |
| 1.A.3: a bone from a butcher's shop | 1.B.3: un hueso de una carnicería |
| 1.A.4: and ran away with it. | 1.B.4: y salió corriendo con él. |

Finally, translation blocks A and B have a sound START (1) and a sound END (2) coding, which are synchronized in tenths of seconds of maximum and minimum times.

Thus, for example, code 1.A.1.1 means translation unit 1, time start of translation block 1, in the language to be learned. Likewise, code 1.B.4.2 means translation unit 1, time end of the translation block in the proficient language number 4.

Therefore, a coding exists that identifies all the translation units and their corresponding translation blocks in each language at its start and end from 1.A.1.1 to x.A.n.2 and from 1.B.1.1 to z.B.n.2. The following table lists the proposed translation block pairs:

| | |
|---|---|
| Translation Unit 1, Translation Block 1, language to be learned (A), start 1 - end 2 | **START (1) - "One day" -END (2)** |
| | |
| Translation Unit 1, Translation Block 1, proficient language B, start 1 - end 2 | **START (1) - "Un dia" -END (2)** |
| | |
| 1.A.2.1 - 1.A.2.2 | **1 - "a dog stole" - 2** |
| 1.B.2.1 - 1.B.2.2 | **1 - "un perro robó" - 2** |
| | |
| 1.A.3.1 - 1.A.3.2 | **1 - "a bone from a butcher's shop" - 2** |
| 1.B.3.1 - 1.B.3.2 | **1 - "un hueso de una carnicería" - 2** |
| | |
| 1.A.4.1 - 1.A.4.2 | **1 - "and ran away with it." - 2** |
| 1.B.4.1 - 1.B.4.2 | **1 - "y salió corriendo con él." - 2** |

### (Step 2) Definition of metrics.

After the block coding, the method implements the definition of the metrics, which are of two types: (a) time based, measured in tenths of seconds and (b) quantitative, measured in number of words. Both metrics establish maximum and minimum levels of proficiency of the language to be translated.

A determined synchronization is required applying a specific time metric (in tenths of seconds), which establishes the parameterisation required at different levels of proficiency of the language to be learned, which is achieved by mastering the defined translation blocks.

The metrics are developed for exactly adapting the time delay of the application and the sound effect that consists in the modulated delay of the sound signal. The result is a sound echo effect or simultaneously translated emission effect with delay

The time metrics establish the duration times of the translation blocks of the simultaneously translated emission with delay, the time distances (scaled) between start and end sounds of the translation blocks between the language to be learned (A) and the proficient language (B) and the total duration of each translation unit (group of translation blocks A and B).

The number of words metric establishes how many words each translation block should have and by aggregation, each translation unit, and the difference in words between each translation block in the language to be learned (A) and its corresponding translation block in the proficient language (B).

Both metrics establish maximums and minimums allowed by each of the 4 established levels of language proficiency.

The metrics are defined as follows:
**T1.** Time Duration, in tenths of seconds, of each Translation Block of the language to be learned A.
**T2.** Time Duration, in tenths of seconds, of the Translation Unit = group of Translation Blocks A
**T3.** Scaling time, in tenths of seconds, between the start of the sound in A.1.1 and the start of the sound in B.1.1
**T4.** Scaling time, in tenths of seconds, between the end of the sound in A.1.2 and the end of the sound in B.1.2
**T5.** Scaling time, in tenths of seconds, between the end of the sound in B.1.2 and the start of the sound in A.2.1

Also, regardless of the language, the number of words per translation block will be taken into account as well as the maximum difference in words between Translation Blocks A and B with the same numbering.

### (Step 3) Establishing of the processes matrix.

This parameterisation establishes the aforementioned metric by applying maximum and minimum given times and a determined number of words for each one of the established levels. These are listed in the following processes matrix:

| **PROCESSES MATRIX** | **LEVEL 1 LOW** | **LEVEL 2 MEDIUM** | **LEVEL 3 HIGH** | **LEVEL4 EXPERT** |
|---|---|---|---|---|
| **T1: Time in seconds of the Translation Blocks (minimums and maximums)** | 0.5 - 1.50 | 1.50 - 3.00 | 2.00 - 5.00 | 4.00 - 7.00 |
| **T2: Time in seconds of the Translation Unit (minimums and maximums)** | 60 - 90 | 70 - 120 | 90 - 180 | 120 - 240 |
| **T3: Time in seconds between A1.1 -B1.1 (minimums and maximums)** | 0.40-0.50 | 0.30 - 0.40 | 0.20 - 0.30 | 0.10 - 0.20 |
| **T4: Time in seconds between A1.2 -B1.2 (minimums and maximums)** | 0.30 - 0.40 | 0.20 - 0.35 | 0.15 - 0.30 | 0.10 - 0.25 |
| **T5: Time in seconds between B1.2 -A2.1 (minimums and maximums)** | 0.65 - 0.85 | 0.5 - 0.75 | 0.45 - 0.65 | 0.35 - 0.55 |
| **Minimum and maximum No. of words per block** | 1 - 8 | 4 - 12 | 7 - 15 | 9 - 20 |
| **Maximum difference of words between Blocks A and B** | 2 | 3 | 4 | 4 |

### (Step 4) Application of acoustic techniques.

Finally, the described method applies specific acoustic techniques taking into account the way the sound is perceived. The system is properly applied by employing a binaural (both ears) method, it must neutralize the masking phenomenon between sounds, it must exactly determine the delay to apply between emissions using the listed metrics and finally, it must master the sound emission by languages selectable between the right and left ears.

In order to improve the clarity of the simultaneous emissions, the sound qualities of the described method are also properly mastered in both languages, according to the descriptive requirements of the message. The following are taken into account: the loudness (perception of the intensity of the sound), the musical pitch (linked to the tone perception, how low or high the sound is perceived), the musical timbre (it is characterized by the shape of the wave; in other words, by its harmonic component) and the accompanying or ambient sound.

The proper way of applying the method is through the binaural reception (preferably using a headset). In its application, it takes into account the effects of the different time delays between emissions, the wavelength that will be received through each earpiece in each language and the elimination of the masking effects (related with the time as well as the frequency) that may occur in each of the simultaneous emissions with delay played back using the method purpose of the invention, achieving a high quality of sound perception between both emissions and a perfect synchronization and tuning between them and in this way increasing the understanding of the language to be learned.

Any of the sound playback devices available on the market can be used for carrying out the method purpose of the invention: CD players, DVD players, MP3, MP4 players, other devices such as mobile phones, PDAs and any other device that is capable of playing back sound.

## Claims

1. Method for learning a language using quasi simultaneous playback, characterised because it essentially includes the following stages:
(i) coding of translation blocks defined as a groups of words, which represent metrics of a specific duration in seconds and a number of predefined words;
(ii) definition of the metrics, which are of two types: (a) time based, measured in tenths of seconds and (b) quantitative, measured in number of words; and where both metrics establish maximum and minimum levels of proficiency of the language to be translated; and
(iii) establishment of a process matrix configured for the parameterisation of the aforementioned metric by applying maximum and minimum given times and a determined number of words for each one of the developed levels; and
(iv) application of specific acoustic techniques taking into account the way the sound is perceived, in such a way that it must be received in both ears, it must neutralize the masking phenomenon between sounds, it must exactly determine the delay to apply between emissions using the listed metrics and, finally, it must master the sound emission by languages selectable between the right and left ears.

2. Device for learning a language using quasi simultaneous playback, characterised because it includes methods for implementing the method of claim 1.

3. Use of the method of claim 1 or the device of claim 2 for learning languages.
